# EUROPEAN PATENT SPECIFICATION

(11) **EP 1 752 485 B1**
(45) Date of publication and mention of the grant of the patent: **08.10.2008**
(21) Application number: 05017231.1
(22) Date of filing: 08.08.2005
(51) Int. Cl.: C08J 9/00

(54) **Soft polyolefin foams with high heat resistance**
Weicher Polyolefinschaum mit hoher Hitzebeständigkeit
Mousse de polyoléfine souple ayant une résistance élevée à la chaleur

(43) Date of publication of application: 14.02.2007
(73) Proprietor: Alveo AG, 6002 Luzern (CH)
(72) Inventor: Purcell, David, Merthyr Tydfil, Mid-Glamorgan, CF48 1JU (GB); Willemse, Remco, 6004 DA Weert (NL); Ross, Thomas, 65824 Schwalbach (DE); Hennessy, Mark R., Hengoed, Mid-Glamorgan, CF 827 RB. (GB); Wolf, Frank Thomas, 21100 Varese (IT)
(74) Representative: Strehl Schübel-Hopf & Partner

(56) References cited:
- EP-A- 0 425 695
- US-A1- 2003 013 778
- PATENT ABSTRACTS OF JAPAN vol. 1999, no. 04, 30 April 1999 (1999-04-30) & JP 11 020061 A (SEKISUI CHEM CO LTD), 26 January 1999 (1999-01-26)

## Description

The present invention concerns a closed cell, soft crosslinked foam comprising a blend of polypropylene and a second soft polyolefin material. The properties of said foam are, among others, a low compression strength and a heat resistance. This combination of properties is unique for polyolefin based foams.

### Prior Art and Technical Problem

There has been a demand in recent years for materials showing a combination of high softness and/or a soft touch and high temperature stability. Such materials are e.g. particularly demanded in the automotive industry for interior parts of the automobile, particularly such parts which the passengers come into contact with. The softness of such materials can contribute to the safety, but also provides a more pleasant feeling when touched. The temperature resistance can also contribute to the safety in case of fires and/or the susceptibility to ignition.

The patent application US 2003207953 describes a crosslinked olefin elastomer foam with a specific gravity of 0.05 to 0.2 and an expansion ratio of 8 to 15. The crosslinked foam is obtained by heating an elastomer composition comprising a specific ethylene/alpha-olefin copolymer, an organic peroxide, a crosslinking auxiliary and a foaming agent. The crosslinked foam is stated to have a high expansion ratio, is free from surface roughening attributed to defoaming, realizes a soft touch, exhibits a low compression set and is excellent in mechanical strength (particularly tear strength) and heat resistance. The olefin elastomer composition might consist of 70 to 98 parts by weight of an ethylene/[alpha]-olefin copolymer and 2 to 30 parts by weight of a polypropylene provided that the sum of ethylene/[alpha]-olefin copolymer and polypropylene is 100 parts by weight. However, the softness and temperature stability of these foams is still unsatisfactory in many applications.

JP56112942 describes a soft crosslinked highly expanded foam with excellent heat insulating property and improved dimensional stability at a high temperature, which is obtained by the addition of a crystalline low-molecular polypropylene to a resin mixture of a polyethylene with a polyolefin thermoplastic elastomer.

JP56112940 describes a soft highly expanded foam with excellent heat insulating property and improved dimensional stability at a high temperature, which is prepared by the addition of low-molecular PE to a resin mixture of PE with a polyolefin thermoplastic elastomer which is a mixture of an ethylene-propylene-(nonconjugated diene) copolymer and PP, partially crosslinked with each other.

JP56104947 describes a soft foam with high-temperature heat resistance and excellent heat insulating property, useful for a low-temperature insulation material for a cooler, a heat insulation material for a central-heating high-temperature medium pipe, which comprises a PE and a thermoplastic polyolefin elastomer, which is an ethylene-propylene (nonconjugated diene) copolymer rubber mixed with a PP, and the resulting mixture is partially crosslinked. 90-40pts.wt. PE
(i) is mixed with 10- 60pts.wt. said thermoplastic elastomer
(ii) and the resulting mixture is further mixed with heat decomposition type foaming agent (e.g., azodicarbonamide)
(iii) and a crosslinking agent (e.g., dicumyl peroxide). A foam is obtained by transferring the moulded product into a high-temperature atmosphere and decomposing the crosslinking agent and the foaming agents.

JP2004204154 describes a crosslinked polyolefin resin foam that has a high heat resistance and excellent flexibility and to provide its production method. This invention is a crosslinked polyolefin resin foam that is given by crosslinking and foaming a polyolefin resin including LLDPE and >= 30 wt.% of a PP resin, that has a thickness of >= 1 mm, and simultaneously has an overall crosslinking degree of <= 65%.

JP8157623 describes an interior material useful for interior decoration for a door of an automobile and of a ceiling, having excellent adhesiveness to a core material free from blocking to a primer layer, by subjecting the exposed surface of a foam of a specific laminated foam to corona discharge treatment, coating the treated surface with a primer and drying. The exposed surface of a foam of a laminated foam obtained by laminating a vinyl chloride resin sheet (e.g. one having 0.4-0.7mm thickness) to one side of the foam (e.g. one having 15-30 times expansion ratio and 1-4mm thickness) which comprises a PP-based resin [e.g. a mixture of 40-100wt.% of random PP and 60-0wt.% of an ethylenic resin such as (linear low-density) PE or ethylene-vinyl acetate copolymer].

JP2003334880 describes a crosslinked polyolefinic resin foam having high heat resistance and flexibility. The crosslinked polyolefinic resin foam is obtained by crosslinking and foaming a polyolefinic resin containing 30 wt.% or more of a random PP type resin and characterized in that the thickness is not more than 1 mm, and the total crosslinking degree is not less than 65%,

JP2000351865 describes a polyolefin resin composition which gives a foam excellent in resistances to heat and pressure and exhibits improved safeness and handleability in the production process by compounding a polyolefin resin with specified amounts of a dipropenyl compound and a thermally decomposable chemical blowing agent. A polyolefin resin in an amount of 100 pts.wt. is compounded with 1-10 pts.wt. dipropenyl compound of the formula and 1-15 pts.wt. thermally decomposable chemical blowing agent. Preferably, the polyolefin resin comprises 30-90 wt.% PP resin having an MFR of 0.5-5 g/10 min and preferably having an m.p. of 125-155 °C and 10-70 wt.% PE resin having an MFR of 1-20 g/10 min and preferably having a density of 0.890-0.940 g/cm3.

JP5009325 describes a foam containing a homogeneously dispersed foaming agent with hardly any pinholes, excellent in tensile strength and elongation and useful as an automotive interior trim material, etc., by moulding a specific composition for a crosslinked foam, then crosslinking the moulded product and subsequently expanding the crosslinked moulded product. With 100 pts.wt. resin composed of 10-50wt.% PP and 50-90wt.% ethylene-propylene-diene copolymer rubber, are kneaded 10-20 pts.wt. foaming agent such as azodicarbonamide at a temperature below the decomposition temperature of the aforementioned foaming agent. Thereby, a foaming agent- containing masterbatch is produced. With 10-80wt.% PP, are kneaded 20-90wt.% ethylene-propylene-diene copolymer rubber and 5-70wt.% above-mentioned masterbatch at a temperature below the decomposition temperature of the aforementioned foaming agent. As a result, a composition for a crosslinked foam is produced and moulded. The obtained moulded product is subsequently crosslinked and then expanded to afford the objective foam.

JP3192133 describes an elastomer foam having uniform and fine cells and improved flexibility and mechanical properties by moulding a thermoplastic olefin elastomer containing a blowing agent, crosslinking the moulding, heating it under pressure and releasing the pressure. A thermoplastic olefin elastomer containing a blowing agent is obtained by blending a mixture of 100 pts.wt. thermoplastic olefin elastomer selected between an ethylene/propylene/(diene) copolymer and an ethylene/vinyl acetate copolymer of a vinyl acetate content of 3wt.% or more with optionally 10-70 pts.wt. PP, 3-30 pts.wt. butyl rubber and 3-40 pts.wt. mineral oil softener and further with 3-30 pts.wt. (per 100 pts.wt. mixture) blowing agent. This elastomer is moulded at a temperature lower than the decomposition temperature of the blowing agent and crosslinked by irradiation with an ionizing radiation in a does of 0.1-50Mrad. The product is heated to a temperature higher than the decomposition temperature of the blowing agent under a pressure of 50-100kg/cm² for 2-20min and expanded by releasing the pressure.

JP2194037 describes a resin foam having a high open cell rate and excellent compressive characteristics comprising a crosslinkable PE resin and a PP resin and prepared by crosslinking the PE resin so as to give a specified open cell rate thereto. A resin foam containing a crosslinkable polyethylene resin (a) and a polypropylene resin (b) having an m.p. higher that that of the crosslinkable polyethylene resin by at least 20 deg.C and is lower than 190 deg.C in a range of (a)/[(a)+(b)]=40-90wt.% and (b)/[(a)+(b)]=10-60wt.% and prepared by crosslinking the crosslinkable polyethylene resin so as to give thereto an open cell rate of 60-90%. As the crosslinkable polyethylene resin used, a low- density polyethylene or an ethylene/vinyl acetate copolymer is particularly desirable. As the polypropylene resin, a crystalline homopolymer of propylene is particularly desirable.

WO 01/70860 describes a 1-step direct extruded non-crosslinked foam comprising PP and EVA and a volatile organic compound, e.g. isobutene as blowing agent having a high temperature resistance.

For many applications the currently existing closed cell polyolefin foams do not have a satisfactory combination of sufficient low compressive strength and/or softness and high temperature stability. It is therefore an object of the present invention to provide such foams.

The inventors have now discovered a crosslinked polyolefin foam obtainable from a blend of a polypropylene (PP) with specific parameters and an ethylene-polymer having particular properties, in which the properties of high softness and high temperature stability are combined in one foam.

### Brief description of the invention

The present invention concerns a soft, closed cell crosslinked polyolefin foam with a high temperature stability.

Specifically, the invention relates to a closed cell, soft polyolefin foam having a high temperature resistance, obtainable by the following process:
a. blending a composition comprising: (i) 10-50 parts by weight of a polypropylene having a MFI of 0.1 to 15 g/10 min at 230°C and 2.16kg and a melting temperature of at least 155 °C, and (ii) 90-50 parts by weight of an ethylene-polymer selected from EVA, EMA, EEA, EAA, EBA, VLDPE, VLLDPE and/or a metallocene polyethylene, the ethylene-polymer having a MFI of 0.1 to 15 g/10 min at 190°C and 2.16kg, with a chemical blowing agent;
b. forming a sheet-like material, wherein the blending of the composition with the chemical blowing agent is performed prior to and/or simultaneously with the forming;
c. crosslinking the sheet-like material obtained in step b. to a crosslinking degree of 20 to 60%; and
d. foaming the crosslinked sheet-like material at an elevated temperature in a continuous process, to obtain a foam having a density of 20 to 400 kg/m³.

### Detailed description of the invention

The features and advantages of the foam according to the present invention are explained in more detail below.

The foam according to the present invention is a closed cell polyolefin foam. The term "closed cell", in contrast to "open cell", is known to a skilled person and means that essentially all cell walls of the foam are undamaged. Preferably, at least 90% of the cells have undamaged cell walls, more preferably at least 95%, even more preferably more than 98%. When applying the process and the source product parameters of present claim 1, a closed cell foam with about 98% or more undamaged cells is generally obtained.

The first step for obtaining the foam of the present invention is blending a composition, comprising (i) a polypropylene and (ii) an ethylene-polymer, with a chemical blowing agent. Optionally, the composition contains a further component (iii) which is selected from LDPE, HOPE and/or LLDPE.

The above mentioned composition contains 10-50 parts by weight of the polypropylene (i), preferably 20-50, more preferably 25-40 parts by weight, most preferably 30 parts by weight, based on the weight of the composition. If less than 10 parts by weight of the polypropylene are used, the temperature stability of the foam may not be sufficient. If more than 50 parts by weight are used, the softness of the foam may not be sufficient.

The melting temperature of the polypropylene is at least 155°C or preferably more than 155°C. If a PP having a melting temperature below 155°C is used, a high temperature resistance may not be obtained. Preferably the melting temperature is 160-170°C.

The polypropylene is preferably a crystalline polypropylene, more preferably a homopolypropylene (hPP).

The ethylene-polymer (ii) used in the composition for blending with the blowing agent is contained in an amount of 90-50 parts by weight, based on the weight of the composition, preferably 80-50, more preferably 75-60 parts by weight.

The ethylene-polymer is selected from ethylene vinyl acetate copolymer(EVA), ethylene methylacrylate (EMA), ethylene ethylacrylate (EEA), ethylene acrylic acid (EAA), ethylene butylacrylate (EBA), very low density polyethylene (VLDPE), very linear low density polyethylene (VLLDPE), metallocene polyethylene's and combinations thereof.

The EVA in the present invention generally has a vinyl acetate content of 3 to 70 wt.-%, preferably 5-30 wt.-%, even more preferably 10 to 20 wt.-%.

In one preferred embodiment of the present invention the composition for blending with the chemical blowing agent (or foaming agent) contains no other polymers besides the polypropylene (i) and the ethylene-polymer (ii).

In another preferred embodiment of the present invention the composition for blending with the chemical blowing agent contains another polymer (iii) such as LDPE, LLDPE and/or HDPE, preferably LLDPE, in order to adjust the properties of the foam. This other polymer is preferably present in an amount of 0.5 to 10 parts by weight, based on the composition of the polypropylene(i), the ethylene-polymer (ii) and the other polymer (iii).

The ethylene-polymer is preferably only or essentially only EVA. In another preferred embodiment, the ethylene-polymer is preferably only or essentially only VLDPE or VLLDPE.

The composition before blending with the chemical blowing agent is preferably a combination of PP/EVA/LLDPE or PP/VLDPE/LLDPE. Particularly preferred polymer combinations for the composition to be blended with the chemical blowing agent are the combinations hPP/EVA, hPP/EVA/LLDPE, hPP/VLDPE and hPP/VLDPE/LLDPE. Preferably the polymer composition consists of any of these polymer combinations. In these combinations, VLDPE is preferably VLLDPE.

The composition containing the polypropylene (i), the ethylene-copolymer (ii) and optionally the other polymer (iii) may contain further polymers as long as the effect of the invention is not impaired, but preferably contains no other polymers or rubber components. However, common additives may be present like crosslinking promoters, antioxidants, nucleating agents and/or crosslinking agents in case of chemical crosslinking.

It is important that the polypropylene and the ethylene-polymer have a particular melt flow index (MFI) of 0.1 to 15 g/min at 230°C and 2.16kg as determined by BS EN ISO 1133:2000. The MFI of the polypropylene is preferably 2-11 or 2-10 g/10min. The MFI of the ethylene-polymer is preferably 0.1 to 15.0 g/min at 190°C and 2.16kg as determined by BS EN ISO 1133:2000. The MFI of the ethylene-polymer, preferably ethylene vinyl acetate, is preferably 0.5 - 8.0 g/min.

The MFI values of the optional other polymer (iii) is generally 0.1 - 15.0 g/min, preferably 2.0-8.0 g/min at 190°C and 2.16kg.

For a skilled person the MFI gives a measure of the flow characteristics of a polymer and a rough indication of the molecular weight and processability of a polymer material. If the MFI values are too high, which corresponds to a low viscosity, the extrusion according to the present invention can not be satisfactorily carried out. Problems may in this case be low pressures during melt processing, problems with calendaring and setting the sheet thickness profile, uneven cooling profile due to low melt viscosity, poor melt strength and/or machine problems. Too low MFI values can lead to high pressures during melt processing, difficulties in calendaring, sheet quality and profile problems, and a higher temperature is necessary for processing which again causes a risk of foaming agent decomposition and activation.

The above MFI ranges are also important for the foaming process of the invention because they reflect the viscosity of the material and the viscosity has an effect on the foaming. The reason why particular ranges of MFI values have to be selected for the present invention might be found in the following explanation although the present invention is not restricted thereto. A lower MFI value material could improve some physical properties as the molecular chain length is higher creating more energy needed for chains to flow when a stress is applied. Also, the longer the molecular chain (Mw) the more crystal entities the chain can crystallise giving more strength via intermolecular ties. However, at a too low MFI the viscosity becomes too high. On the other hand, materials with higher MFI values have shorter chains. Therefore, in a given volume there are more chain ends, on a microscopic level they rotate and they create free volume as they need more space to rotate (above Tg of polymer). This increases the free volume and assists flow and enables an easy flow under a stress and reduces some physical properties. For the purposes of the present invention the MFI should be in above mentioned ranges to compromise between these properties.

The composition to be blended with the chemical foaming agent can preferably be combined with a crosslinking promoter in order to adapt or improve the properties of the foam via the crosslinking degree. The crosslinking degree in the present invention is determined according to ASTM-2765 using xylene as a solvent to dissolve non-crosslinked components. In principle non-crosslinked material is dissolved in xylene and the crosslinking degree is expressed as the weight percentage of crosslinked material. Such crosslinking promoters are known to the skilled person. A range of functional monomer additives are used in the invention to promote crosslinking of polymers. In the present invention trimethylolpropantrimethacrylate (TMPTMA) is preferably used. The crosslinking promoters are generally added to the composition to be blended with the foaming agent in usual amounts such as 0.1 - 6.5, preferably 1.0 - 4.5 parts by weight.

According to the present invention the composition is combined with a chemical blowing agent (or foaming agent). Generally there is no restriction as regards the type of chemical blowing agent in the present invention. Chemical blowing agents are for example azo compounds, like azodicarbonamide, hydrazine compounds, carbazides, tetrazoles, nitroso compounds or carbonates. In the present invention azodicarbonamide is preferably used.

By the amount of the chemical blowing agent the density of the produced foam can be controlled. A skilled person can determine the right amount of blowing agent for an intended foam density. The chemical blowing agent is generally used in an amount of 2.0 - 25.0 parts by weight, or 2.0 to 20.0 parts by weight, depending on the required expansion, and preferably about 5 - 9 parts by weight for a 67kg/m³ foam density, in relation to the composition to be blended therewith.

After blending the above mentioned composition with the chemical blowing agent or simultaneously with the blending, a sheet-like material, for example a sheet, film or web, is formed, preferably by extrusion. Preferably, the extrusion is performed with a twin-screw extruder. Other possibilities of forming the sheet-like material are calendaring and/or kneading.

In a preferred embodiment, the temperature of forming or extruding, kneading and/or calendaring the polymers in a sheet is 190°C or less to prevent the sheet from prefoaming, and to get a regular cell structure and a flat foam surface. The lower limit is the melting point of the polypropylene used in the process.

After forming, preferably by extrusion, the sheet-like material obtained by the forming is crosslinked according to any common technique, i.e. by chemical or physical crosslinking. Physical crosslinking, e.g. by electron beam or gamma irradiation, using for example a cobalt 60 source, is preferred. Electron radiation is particularly preferred. The crosslinking is performed so that a crosslinking degree of 20 to 60%, preferably 30-40%, as measured by ASTM-2765 using xylene as a solvent, is obtained. As mentioned above a crosslinking promoter can preferably be used.

The foaming is performed at an elevated temperature, preferably 200-260°C, more preferably 220-260°C, in a continuous process. The foaming is not performed as a batch process.

The foaming is preferably conducted in a vertical and/or a horizontal oven system. The foaming may also be conducted in an impregnation process using e.g. nitrogen in a autoclave, followed by a free foaming in an oven system.

The process of the present invention is conducted such that a density of 20 to 400 kg/m³ is obtained, preferably 20 kg/m³ to 300 kg/m³, as measured by ISO 845. The density can be controlled by the amount of blowing agent.

The cell size is preferably from 0.05 to about 2.0 mm, preferably from 0.1 mm to 0.6 mm. The cell size is determined by scanning electron microscopy.

In a particular embodiment of the invention the production of the soft crosslinked foam can be done by a multi-step process, comprising:
1) mixing/extrusion or mixing/kneading or mixing/calendaring a polymer matrix sheet;
2) crosslinking by radiation source, like electron beam or gamma ray (Cobalt60); and
3) the foaming process
   a) in a free foaming oven system
   b) in a impregnation process with nitrogen in an autoclave, followed by a free foaming in an oven system.

A process to make a roll foam preferably comprises the following steps:
1) Extrusion/kneading:
   Mixing/extrusion and/or mixing/kneading/calendaring as a film or a sheet, with or without cutting off the sheet;
2) Crosslinking:
   Physical crosslinking: by electron beam or gamma irradiation;
3) Foaming:
   Through decomposition of an organic blowing foaming agent added during the mixing phase, being azodicarbonamide;
4) Expansion process: by free foaming oven process.

The foam of the present invention has an advantageous combination of high temperature stability and softness.

The foam of the present invention is a soft foam. The softness can e.g. be expressed by the compression strength and the Shore hardness. In the present invention the compression strength values are determined by the method according to ISO 844. According to the present invention the foams have low compression strengths. The compression strength values are preferably in the range of 30 to 100kPa, more preferably 30 to 60 kPa, measured on a foam with a density of 70 kg/m³ at 25 % deflection (ISO 844). The Shore hardness is a measure of the resistance of material to indentation by a 3 spring-loaded indenter. The higher the number, the greater the resistance. The Shore Hardness (O) and (OO) is measured according to ASTM D 2240.

The temperature stability is tested according to ISO 7214 - 1998 (E) by placing a carefully pre-cut sample into a controlled oven at specific temperature for 24hr. On the sample a 10cm x 10cm indicate marker is stamped, therefore dimensions are known before testing. The sample is removed from the oven after 24hrs and the shrinkage in both machine direction and cross direction are measured. The foam of the present invention can have a temperature stability of higher than 130°C, preferably higher than 135°C, more preferably higher than 140°C, measured according to ISO 7214 -1998 (E).

The present invention also relates to a laminate comprising the foam according to the present invention as at least one layer. The foam could e.g. combined with a film, foil (e.g. polyvinyl chloride (PVC) or a thermoplastic polyolefin), fabrics (polyester, polypropylene), leather and/or nonwovens using standard techniques known in the art. The foam according to the invention may be laminated on one or both sides with these materials.

The foam or laminate can preferably be used in or for automobile interior parts such as doors, door inserts, door rolls, panels, door panels, arm rests, center consoles, seat back panels or head liners.

For preparing a laminate, vacuum forming techniques may be applied, e.g. for preparing laminates with foil, films or fabrics. Other techniques are e.g. press forming with substrates (e.g. NF/PP, GF/PP, Woodstock), low pressure moulding or melt strand moulding (e.g. with PP (LPM, LPE)).

### Examples

The temperature stability (ISO 7214 -1998 (E)), compression strength (ISO 844) and shore hardness (O) and (OO), both acc. ASTM D 2240, was measured as mentioned above using the standardized methods.

### Example 1:

A commercial EVA with a MFI of 4g/10min (190°C, 2.16kg) is mixed with 20, 30, 40 and 50% homopolypropylene with a MFI of 3.0 or 10.5 g/10min (230°C, 2.16kg) and a melting temperature of 165°C and 5% LLDPE with an MFI of 4.6 g/10min (190°C, 2.16kg). In addition small amounts (2 parts by weight) of TMPTMA were added to improve processing and increase the crosslinking degree. The polymers are blended and compounded via twin-screw extruding at a processing temperature of 185°C. After extrusion the sheet is cross-linked by irradiation and foamed continuously around 240°C. The content of azodicarbonamide was such that a foam of 68kg/m³ was obtained.

A foam with 30% hPP (MFI 3.0 g/10min) in EVA had a Shore hardness O value of 26 and a Shore hardness OO at 67, measured on a foam with 68kg/m³. Compression strength was measured as 50 kPa (on 68kg/m³ foam with 25% deflection). The temperature stability was up to 140°C.

### Example 2:

A commercial vLLDPE with a MFI of 2.6g/10min (190°C, 2.16kg) is mixed with 20, 30, 40 and 50% homopolypropylene with a MFI of 3.0 or 10.5 g/10min (230°C, 2.16kg) and a melting temperature of 164°C and 5% LLDPE with an MFI of 4.6 g/10min (190°C, 2.16kg). The polymers are blended and compounded via twin-screw extruding at a processing temperature of 185°C. After extrusion the sheet is cross-linked by irradiation and foamed continuously around 240°C. The content of azodicarbonamide was such that a foam of 67kg/m³ was obtained.

A foam with 30% hPP (MFI 3.0 g/10min) in vLLDPE had a Shore hardness O value of 26 and a Shore hardness OO at 65, measured on a foam with 60kg/m³. Compression strength was determined as 45 kPa (on 60kg/m³ foam with 25% deflection). The temperature stability was up to 140°C.

### Example 3

A commercial EVA with a MFI of 4g/10min (190°C, 2.16kg) is mixed with 20, 30, 40 and 50% homopolypropylene with a MFI of 3.0 or 10.5 g/10min (230°C, 2.16kg) and a melting temperature of 165°C. In addition small amounts (2 parts by weight) of TMPTMA were added to improve processing and increase the gel level. The polymers are blended and compounded via twin-screw extruding at a processing temperature of 185°C. After extrusion the sheet is cross-linked by irradiation and foamed continuously around 240°C. The content of azodicarbonamide was such that a foam of 68kg/m³ was obtained.

A foam with 30% hPP (MFI 3.0 g/min) in EVA had a Shore hardness O value of 28 and a Shore hardness OO at 66, measured on a foam with 64kg/m³. Compression strength was determined as 48 kPa (on 60kg/m³ foam with 25% deflection) acc. ISO 844. The temperature stability was up to 140°C.

### Example 4

A commercial EVA with a MFI of 4g/10min (190°C, 2.16kg) is mixed with 20, 30, 40 and 50% homopolypropylene with a MFI of 3.0 or 10.5 g/10mins (230°C, 2.16kg) and a melting temperature of 165°C. The polymers are blended and compounded via twin-screw extruding at a processing temperature of 185°C. After extrusion the sheet is cross-linked by irradiation and foamed continuously around 240°C. The content of azodicarbonamide can be used to determine foam density.

A foam with 30% hPP (MFI 3.0 g/10min) in EVA had a Shore hardness O value of 24 and a Shore hardness OO at 63, measured on a foam with 63kg/m³. Compression strength was measured at 44 kPa (on 60kg/m³ foam with 25% deflection) acc. ISO 844.
The temperature stability was up to 140°C.

### Comparative Example 1

A commercial EVA with a MFI of 4 g/10min (190°C, 2.16kg) is mixed with 10, 20 and 30% of a commercial polypropylene copolymer with a MFI of 8 g/10min (190°C, 2.16kg) and a melting temperature of 140°C in a twin-screw extruder at a temperature of 160°C. After extrusion the sheet is cross-linked by radiation and foamed continuously at 240°C. The amount of azodicarbonamide was such that a foam with a density of 65 kg/m³ was obtained.

The foam with 30% co-PP in EVA had a compressive strength of 56 kPa (measured on foam of 65 kg/m³ at 25% deflection, method according to ISO 844),
The temperature stability was 100°C.

**Table: Example Overview**

| | Example 1 | Example 2 | Example 3 | Example 4 | Comparative Example 1 |
|---|---|---|---|---|---|
| Co-PP | | | | | ✔ |
| hPP | ✔ | ✔ | ✔ | ✔ | |
| EVA | ✔ | | ✔ | ✔ | ✔ |
| VLLDPE | | ✔ | | | |
| LLDPE | ✔ | ✔ | | | |
| TMPTMA | ✔ | | ✔ | | |
| Foaming agent | ✔ | ✔ | ✔ | ✔ | ✔ |

These examples clearly show that a foam according to the present invention, but containing a polypropylene having a melting point lower than 155°C, does not show a good combination of temperature resistance and softness compared with examples according to the present invention.

The effects of the invention are further shown by the following figures:

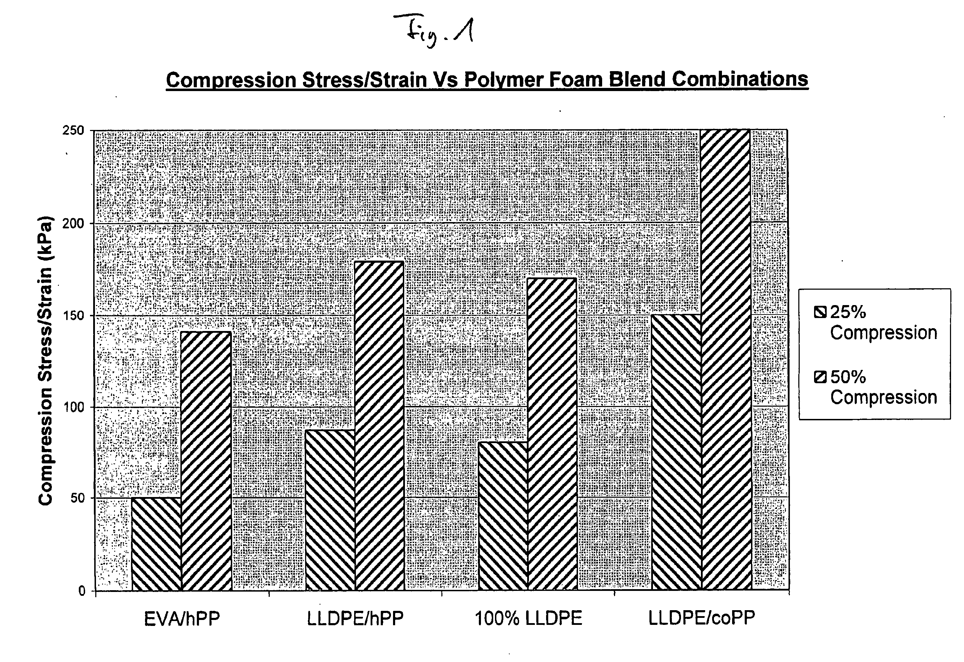

In Fig. 1 the compression strength of a composition according to the present invention (EVA/hPP) and of known foams is shown graphically. It is clear that the compression strength is considerably lower in the present invention.

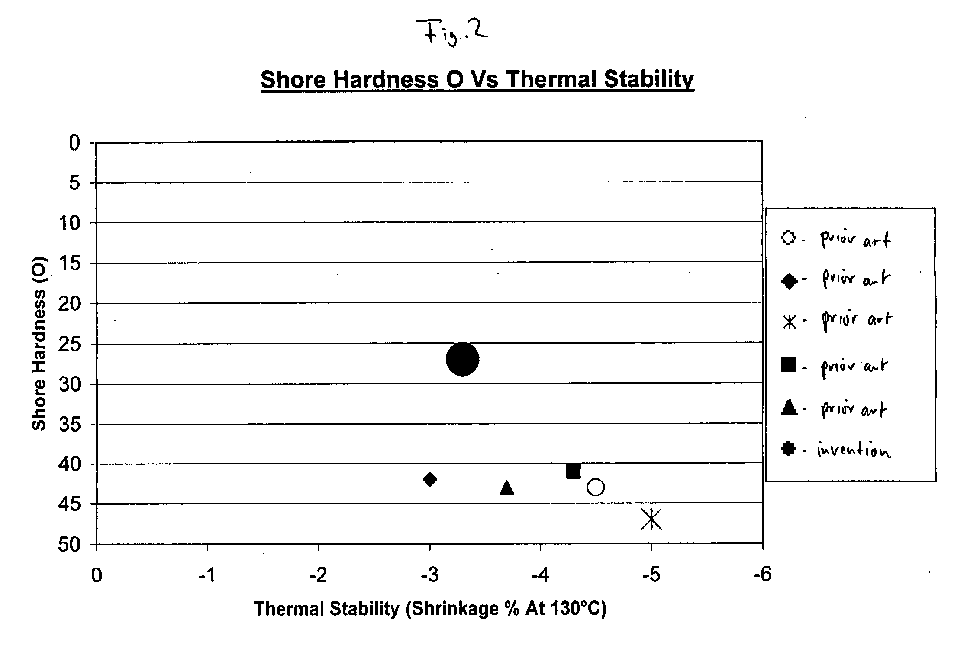

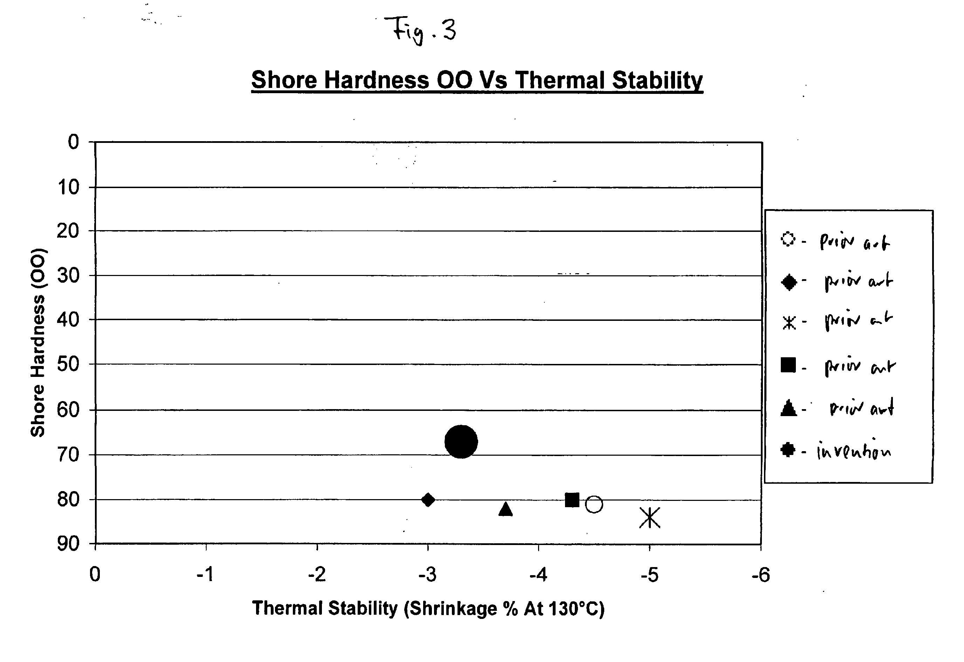

In Fig. 2 and 3, the Shore hardness (O) and (OO) of a composition according to the present invention (Example 3 - EVA/hPP) and of known foams is shown graphically versus the thermal stability. It is clear that the Shore hardness is considerably lower in the present invention (higher Shore hardness values in the case of prior art samples means lower softness). At the same time the thermal stability is improved or at least comparable to prior art samples.

## Claims

1. A closed cell, soft polyolefin foam having a high temperature resistance, obtainable by the following process:
a. blending a composition comprising: (i) 10-50 parts by weight of a polypropylene having a MFI of 0.1 to 15 g/10 min at 230°C and 2.16kg and a melting temperature of at least 155 °C, and (ii) 90-50 parts by weight of an ethylene-polymer selected from EVA, EMA, EEA, EAA, EBA, VLDPE, VLLDPE and/or a metallocene polyethylene, the ethylene-polymer having a MFI of 0.1 to 15 g/10 min at 190°C and 2.16kg,
with a chemical blowing agent;
b. forming a sheet-like material, wherein the blending of the composition with the chemical blowing agent is performed prior to and/or simultaneously with the forming;
c. crosslinking the sheet-like material obtained in step b. to a crosslinking degree of 20 to 60%; and
d. foaming the crosslinked sheet-like material at an elevated temperature in a continuous process, to obtain a foam having a density of 20 to 400 kg/m³.

2. Foam according to claim 1, wherein the polypropylene is a homopolypropylene.

3. Foam according to claim 1 or 2, wherein the polypropylene has a MFI of 2-11 or 2-10 g/10min, determined at 230°C and 2.16kg.

4. Foam according to any one of the preceding claims, wherein the ethylene-polymer (ii) contains EVA.

5. Foam according to any one of the preceding claims, wherein the ethylene-polymer (ii) contains VLDPE or VLLDPE.

6. Foam according to any one of the preceding claims, wherein EVA has a vinyl acetate content of 3-70 wt.-%.

7. Foam according to any one of the preceding claims, wherein the crosslinking degree is 30-40%.

8. Foam according to any one of the preceding claims, wherein the forming in step b. is performed by extrusion.

9. Foam according to any one of the preceding claims, wherein the crosslinking is performed by physical crosslinking.

10. Foam according to any one of the preceding claims, wherein the crosslinking is performed using a crosslinking promoter.

11. Foam according to any one of the preceding claims, wherein the composition comprising a polypropylene and an ethylene-polymer additionally comprises 0.5 to 10 parts by weight of an LLDPE, LDPE and/or HDPE.

12. Foam according to any one of the preceding claims, wherein the density of the foam is from 20 to 300 kg/m³.

13. Foam according to any one of the preceding claims, wherein the cell size is from 0.05 to 2.0 mm.

14. Foam according to any one of the preceding claims, wherein the foaming is performed at 200-260°C.

15. A laminate comprising a foam according to any one of the preceding claims as at least one layer.

16. Use of a foam or a laminate according to any one of the preceding claims for the production of automobile interior parts.

17. Use according to claim 16, wherein the automobile interior part is a door panel, door roll, door insert, armrest, center console, seat back panel or a head liner.

## Patentansprüche

1. Geschlossenzelliger weicher Polyolefinschaum mit hoher Temperaturbeständigkeit, erhältlich durch das folgende Verfahren:
a. Mischen einer Zusammensetzung, bestehend aus: (i) 10 - 50 Gew.-Teilen eines Polypropylens mit einem MFI von 0,1 bis 15 g/10 Min bei 230 °C und 2,16 kg und einer Schmelztemperatur von mindestens 155 °C, und (ii) 90 - 50 Gew.-Teilen eines Ethylenpolymers, ausgewählt unter EVA, EMA, EEA, EAA, EBA, VLDPE, VLLDPE und/oder einem Metallocenpolyethylen, wobei das Ethylenpolymer einen MFI von 0,1 bis 15 g/10 Min bei 190 °C und 2,16 kg hat,
mit einem chemischen Blähmittel;
b. Formen eines folienähnlichen Materials, wobei das Mischen der Zusammensetzung mit dem chemischen Blähmittel vor und/oder gleichzeitig mit dem Formen durchgeführt wird;
c. Vernetzen des in Stufe b erhaltenen folienähnlichen Materials bis zu einem Vernetzungsgrad von 20 bis 60 %;
d. Schäumen des vernetzten folienähnlichen Materials bei einer erhöhten Temperatur in einem kontinuierlichen Verfahren, wobei ein Schaum mit einer Dichte von 20 bis 400 kg/m³ erhalten wird.

2. Schaum nach Anspruch 1, wobei das Polypropylen ein Homopolypropylen ist.

3. Schaum nach Anspruch 1 oder 2, wobei das Polypropylen einen MFI von 2 - 11 oder 2 - 10 g/10 Min hat, bestimmt bei 230 °C und 2,16 kg.

4. Schaum nach einem der vorstehenden Ansprüche, wobei das Ethylenpolymer (ii) EVA enthält.

5. Schaum nach einem der vorstehenden Ansprüche, wobei das Ethylenpolymer (ii) VLDPE oder VLLDPE enthält.

6. Schaum nach einem der vorstehenden Ansprüche, wobei EVA einen Vinylacetatgehalt von 3 bis 70 Gew.-% aufweist.

7. Schaum nach einem der vorstehenden Ansprüche, wobei der Vernetzungsgrad 30 bis 40 % ist.

8. Schaum nach einem der vorstehenden Ansprüche, wobei das Formen in Stufe b durch Extrudieren durchgeführt wird.

9. Schaum nach einem der vorstehenden Ansprüche, wobei die Vernetzung durch physikalisches Vernetzen durchgeführt wird.

10. Schaum nach einem der vorstehenden Ansprüche, wobei die Vernetzung unter Einsatz eines Vernetzungsbeschleunigers durchgeführt wird.

11. Schaum nach einem der vorstehenden Ansprüche, wobei die Zusammensetzung, die ein Polypropylen und ein Ethylenpolymer enthält, zusätzlich 0,5 bis 10 Gew.-Teile eines LLDPE, LDPE und/oder HDPE umfasst.

12. Schaum nach einem der vorstehenden Ansprüche, wobei die Dichte des Schaums 20 bis 300 kg/m³ ist.

13. Schaum nach einem der vorstehenden Ansprüche, wobei die Zellgröße 0,05 bis 2,0 mm ist.

14. Schaum nach einem der vorstehenden Ansprüche, wobei das Schäumen bei 200 bis 260 °C durchgeführt wird.

15. Laminat, enthaltend einen Schaum nach einem der vorstehenden Ansprüche als mindestens eine Schicht.

16. Verwendung eines Schaums oder eines Laminats nach einem der vorstehenden Ansprüche für die Herstellung von Automobilinnenteilen.

17. Verwendung nach Anspruch 16, wobei das Automobilinnenteil eine Türverkleidung, Türleiste, Türeinlage, Armstütze, Mittelkonsole, Sitzrückverkleidung oder ein Himmel ist.

## Revendications

1. Mousse de polyoléfine souple à alvéoles fermées ayant une résistance à une température élevée, pouvant être obtenue par le procédé suivant consistant à :
a. mélanger une composition comprenant : (i) de 10 à 50 parties en poids d'un polypropylène ayant un MFI de 0,1 à 15 g/10 minutes à 230 °C et 2,16 kg et une température de fusion d'au moins 155 °C, et (ii) de 90 à 50 parties en poids d'un polymère d'éthylène choisi parmi l'EVA, l'EMA, l'EEA, l'EAA, l'EBA, le VLDPE, le VLLDPE et/ou un polyéthylène métallocène, le polymère d'éthylène ayant un MFI de 0,1 à 15 g/10 minutes à 190 °C et 2,16 kg,
avec un agent gonflant chimique ;
b. former un matériau en feuille, où le mélange de la composition avec l'agent gonflant chimique est réalisé avant et/ou simultanément avec la formation ;
c. réticuler le matériau en feuille obtenu dans l'étape b. à un degré de réticulation de 20 à 60 % ; et
d. mousser le matériau en feuille réticulé à une température élevée dans un procédé continu, pour obtenir une mousse ayant une densité de 20 à 400 kg/m³.

2. Mousse selon la revendication 1, dans laquelle le polypropylène est un homopolypropylène.

3. Mousse selon la revendication 1 ou 2, dans laquelle le polypropylène a un MFI de 2 à 11 ou 2 à 10 g/10 minutes, déterminé à 230 °C et 2,16 kg.

4. Mousse selon l'une quelconque des revendications précédentes, dans laquelle le polymère d'éthylène (ii) contient de l'EVA.

5. Mousse selon l'une quelconque des revendications précédentes, dans laquelle le polymère d'éthylène (ii) contient du VLDPE ou du VLLDPE.

6. Mousse selon l'une quelconque des revendications précédentes, dans laquelle l'EVA a une teneur en acétate de vinyle de 3 à 70 % en poids.

7. Mousse selon l'une quelconque des revendications précédentes, dans laquelle le degré de réticulation est de 30 à 40 %.

8. Mousse selon l'une quelconque des revendications précédentes, dans laquelle la formation dans l'étape b. est réalisée par extrusion.

9. Mousse selon l'une quelconque des revendications précédentes, dans laquelle la réticulation est réalisée par réticulation physique.

10. Mousse selon l'une quelconque des revendications précédentes, dans laquelle la réticulation est réalisée en utilisant un accélérateur de réticulation.

11. Mousse selon l'une quelconque des revendications précédentes, dans laquelle la composition comprenant un polypropylène et un polymère d'éthylène comprend en outre de 0,5 à 10 parties en poids d'un LLDPE, LDPE et/ou HDPE.

12. Mousse selon l'une quelconque des revendications précédentes, dans laquelle la densité de la mousse est de 20 à 300 kg/m³.

13. Mousse selon l'une quelconque des revendications précédentes, dans laquelle la dimension des alvéoles est de 0,05 à 2,0 mm.

14. Mousse selon l'une quelconque des revendications précédentes, dans laquelle le moussage est réalisé à 200 à 260 °C.

15. Stratifié comprenant une mousse selon l'une quelconque des revendications précédentes comme au moins une couche.

16. Utilisation d'une mousse ou d'un stratifié selon l'une quelconque des revendications précédentes pour la production de parties internes d'une automobile.

17. Utilisation selon la revendication 16, dans laquelle la partie intérieure d'une automobile est un panneau de porte, un roulis de porte, un raccord de porte, un accoudoir, une console centrale, un panneau de dossier ou un garnissage de plafond.
